# EUROPEAN PATENT SPECIFICATION

(11) **EP 3 796 687 B1**
(45) Date of publication and mention of the grant of the patent: **27.12.2023**
(21) Application number: 20150085.7
(22) Date of filing: 02.01.2020
(51) Int. Cl.: H04W 4/46, H04W 4/02, H04L 41/147, G06N 20/00

(54) **METHOD, APPARATUS AND COMPUTER PROGRAM FOR PREDICTING A FUTURE QUALITY OF SERVICE OF A WIRELESS COMMUNICATION LINK**
VERFAHREN, VORRICHTUNG UND COMPUTERPROGRAMM ZUR VORHERSAGE EINER ZUKÜNFTIGEN DIENSTGÜTE EINER DRAHTLOSKOMMUNIKATIONSVERBINDUNG
PROCÉDÉ, APPAREILS ET PROGRAMME INFORMATIQUE PERMETTANT DE PRÉDIRE UNE QUALITÉ DE SERVICE FUTURE D'UN LIEN DE COMMUNICATION SANS FIL

(30) Priority: 23.09.2019 EP 19198982
(43) Date of publication of application: 24.03.2021
(73) Proprietor: VOLKSWAGEN AG, 38440 Wolfsburg (DE)
(72) Inventor: GUILLAUME, Jornod, 10245 Berlin (DE); PFADLER, Andreas, 13357 Berlin (DE)

(56) References cited:
- EP-A1- 2 768 256
- WO-A1-2019/240544
- WO-A2-2018/125686

## Description

The present invention relates to a method, apparatus and a computer program for predicting a future quality of service of a wireless communication link, more specifically, but not exclusively, based on a location and an activity of active transceivers in an environment of a transmitting and a receiving mobile transceiver.

The communication between mobile transceivers is a field of research and development. For example, in vehicular applications, research is being performed in order to improve both the performance and the predictability of wireless communication between vehicles in a constantly changing environment. For example, in the scope of cooperative driving, the prediction of the future quality of service (QoS) of a wireless communication link between two vehicles improves the functioning of the vehicular application when the QoS conditions vary. Indeed, when no predictive QoS (PQoS) is provided, the application might only react to variations and might therefore be limited to lower bound performances of the communication system. PQoS systems can run on the vehicles, the communication nodes, with radio access technologies (RATs) such as LTE-V (Long Term Evolution for Vehicular communication) or 5G-V2X (5^{th} generation mobile communication system for Vehicle-to-Anything communication) in their standalone modes, or IEEE 802.11p (a standard of the Institute of Electrical and Electronics Engineers). Combinations of these technologies can also be applied in multi-RAT systems. In such PQoS systems, vehicles can exchange information about the communication surrounding environment in order to provide PQoS.

In the literature, channel models (semi stochastic, like spatial channel model (SCM), and deterministic like ray tracing) provide an estimation of path loss and interference from other communicating nodes. Statistical models may provide an idea about some mapping between the surrounding vehicles and the quality of service. An example is shown in "Performance and Reliability of DSRC Vehicular Safety Communication: A Formal Analysis and IEEE 802.11p VANets: Experimental evaluation of packet inter-reception time provide such model" by Ma, Chen and Refai. The paper "Prediction of Packet Inter Reception Time for Platooning using Conditional Exponential Distribution" by Jornod, El Assad, Kwoczek and Kürner provides a statistical link between surrounding density and packet inter-reception time. It also shows a way to divide the surrounding environment in circular zones to represent traffic densities around the transmitter. It uses the distance between the transceivers to estimate the QoS of the link. Such a system may be applicable in a case where the incoming traffic is on a single lane in the opposite direction.

European patent application EP 2 768 256 A1 relates to a prediction of quality of service of a possible future connection of a device to a wireless network. In said application, hidden nodes are identified, and knowledge on the hidden node is considered when determining a traffic load on the radio link.

International patent application WO 2018/125686 A2 relates to methods and devices for radio communications. In said application, some techniques for discovering hidden nodes, such as repeated discovery signals, are discussed. In International patent application WO 2019/240544 A1, the impact of a hidden node on an availability of transmission resources is also discussed.

There may be a desire for an improved concept for the prediction of a quality of service of wireless communication links between vehicles. The invention is defined in the independent claims. Additional features of the invention are provided in the dependent claims.

Embodiments are based on the finding that, in other concepts, an influence of "hidden nodes" has been neglected in the prediction of the QoS. One of the sources of packet drop in wireless communication is the hidden node problem, where a node creating interference at the receiver is not detectable by the transmitter, making the sensing of the channel inefficient against the undetected node. This may be an issue in systems, in which the transmitter uses a listen-before-talk approach to transmitting on the shared wireless medium. Embodiments of the present disclosure may thus address the question on how to capture the hidden node problems with the modelling of the surrounding communication environment. Embodiments may provide approaches for modelling the interfering environment and the channel load and may provide an approach for dealing with hidden modes.

Embodiments of the present disclosure provide a method for predicting a future quality of service of a wireless communication link between a mobile transceiver and a further mobile transceiver. The method comprises determining information on one or more active transceivers in the environment of the mobile transceiver. The method comprises determining information on an activity of the one or more active transceivers. The method comprises predicting the future quality of service of the wireless communication link based on the activity of the one or more active transceivers. An activity of an active transceiver that is located closer to the further mobile transceiver receives less weight in the prediction of the future quality of service than an activity of an active transceiver that is located further away from the further mobile transceiver. By increasing an influence of an activity of transceivers that are further away from the further mobile transceiver, and may thus be "hidden nodes" for transmissions of the further mobile transceiver, the hidden node problem may be addressed, thus providing an improved concept for the prediction of a quality of service of wireless communication links between vehicles.

For example, the environment of the mobile transceiver may comprise a first (logical) region and a second (logical) region. The first region may be located on a side of the mobile transceiver facing the further mobile transceiver. The second region may be located on a side of the mobile transceiver facing away from the further mobile transceiver. An activity of a first active transceiver that is located within the first region may receive less weight in the prediction of the future quality of service than an activity of a second active transceiver that is located within the second region. Active mobile transceivers within the second region may be more likely to be hidden from the further mobile transceiver, warranting a higher weighting.

For example, the future quality of service of the wireless communication link may be further based on a distance between the further mobile transceiver and the mobile transceiver. The distance between the two mobile transceivers may be another major factor in the determination of the future quality of service.

In some embodiments, the active transceivers may be aggregated in cells of a grid, e.g. to facilitate processing of the activity of the active transceivers. For example, the method may comprise generating a grid of the radio environment of the mobile transceiver. The grid may comprise a plurality of adjoining cells. The information on the activity of the one or more active transceivers may be determined by indicating the activity of the one or more active transceivers per cell in the grid. By aggregating the information on the active transceivers in a grid, processing of the respective data may be facilitated, and the respective information may be more easily transferred to other mobile transceivers.

Again, the grid may be sub-divided into two or more regions (or "portions" of the grid). The method may comprise determining a first portion of the grid that is located closer to the further mobile transceiver. The method may comprise determining a second portion of the grid that is located further away from the further mobile transceiver. The future quality of service of the wireless communication link may be predicted based on the activity that is indicated per cell in the grid. An activity within a cell of the first portion of the grid may receive less weight in the prediction of the future quality of service than an activity within a cell of the second portion of the grid. Similarly, by aggregating and evaluating the activity on a per-cell-level, processing of the activity and transfer of the information between mobile transceivers may be facilitated.

In some embodiments, the grid is aligned with an imaginary line between the mobile transceiver and the further mobile transceiver. The first and the second portions of the grid may be determined based on a pre-determined assignment of cells of the grid to the first and second portions of the grid. This may avoid a constant re-determination of which cells of the grid belong to which portion of the grid.

For example, active transceivers in the second portion of the grid may have a higher probability of being hidden vis-à-vis the further mobile transceiver than active transceivers in the first portion of the grid. Accordingly, they may receive a higher weighting in the prediction of the future Quality of Service.

In more general terms, the method may comprise subdividing the grid into a plurality of portions. The plurality of portions may comprise the first and second portion. The method may comprise weighting the activity per cell of the grid based on the portion the cell is assigned to. The method may comprise predicting the future quality of service of the wireless communication link based on the weighted activity per cell of the grid. By using a plurality of portions, e.g. more than two portions, a higher granularity of the weighting may be introduced.

In some embodiments, the grid is a two-dimensional circular grid. The circular grid may match the range of the wireless communication of the mobile transceiver. Alternatively, the grid may be a two-dimensional rectangular grid. The two-dimensional rectangular grid may be more easily transferrable between two mobile transceivers.

For example, the weights assigned to the activity of the respective cells may be inherent to a machine-learning model used to predict the future quality of service. This may reduce a processing time required for predicting the future QoS. Alternatively or additionally, the weights assigned to the activity of the respective cells may be based on a statistical model.

In various embodiments, the concept is applied to a plurality of wireless communication links at once. Accordingly, the method may comprise predicting the future quality of service of a plurality of wireless communication links between the mobile transceiver and a plurality of further mobile transceivers based on the activity of the one or more active transceivers. For each further mobile transceiver of the plurality of further mobile transceivers, an activity of an active transceiver that is located closer to the further mobile transceiver may receive less weight in the prediction of the future quality of service of the respective wireless communication link than an activity of an active transceiver that is located further away from the further mobile transceiver (and closer to the mobile transceiver). For example, this may be performed for every further mobile transceiver that is in regular communication with the mobile transceiver. The nodes that are located far away from both transmitter and receiver might not be considered problematic.

In some embodiments, the method may comprise adjusting one or more parameters of a content being transmitted over the wireless communication link based on the predicted further quality of service of the wireless communication link. For example, the content may be adapted in order to account for the predicted QoS, e.g. to obtain the best quality while avoiding stalling of the transmissions due to a data rate that is not continuously available on the wireless communication link.

Embodiments of the present disclosure further provide a (corresponding) computer program having a program code for performing the method, when the computer program is executed on a computer, a processor, or a programmable hardware component.

Embodiments of the present disclosure provide a method for predicting a future quality of service of a radio service of a mobile transceiver. The method comprises determining information on one or more active transceivers in the environment of the mobile transceiver. The method comprises generating a grid of the radio environment of the mobile transceiver, the grid comprising a plurality of adjoining cells. The method comprises indicating an activity of the one or more active transceivers per cell in the grid. The method comprises predicting a future quality of service of a radio service of the mobile transceiver based on the grid. A hidden node problem is considered in the prediction of the future quality of service. For example, the method may be implemented by the method introduced above.

Embodiments of the present disclosure further provide an apparatus for predicting a future quality of service of a wireless communication link between a mobile transceiver and a further mobile transceiver. The apparatus comprises one or more interfaces for communicating in a mobile communication system. The apparatus comprises a control module configured to carry out at least one of the above methods. For example, the control module may be configured to determine information on one or more active transceivers in the environment of the mobile transceiver. The control module may be configured to determine information on an activity of the one or more active transceivers. The control module may be configured to predict the future quality of service of the wireless communication link based on the activity of the one or more active transceivers. An activity of an active transceiver that is located closer to the further mobile transceiver may receive less weight in the prediction of the future quality of service than an activity of an active transceiver that is located further away from the further mobile transceiver (and closer to the mobile transceiver). Embodiments of the present disclosure further provide a mobile transceiver comprising the apparatus.

Some other features or aspects will be described using the following non-limiting embodiments of apparatuses or methods or computer programs or computer program products by way of example only, and with reference to the accompanying figures, in which:
- Figs. 1a and 1b: shows methods for predicting a future quality of service of a wireless communication link;
- Fig. 1c: shows an apparatus for predicting a future quality of service of a wireless communication link and of a mobile transceiver comprising such an apparatus;
- Fig. 2: shows a schematic diagram of the hidden node problem.
- Fig. 3: shows a schematic diagram of vehicular mobile transceivers sharing the same environment; and
- Figs. 4a and 4b: show schematic diagrams of an alignment of two two-dimensional circular grids.

Various example embodiments will now be described more fully with reference to the accompanying drawings in which some example embodiments are illustrated. In the figures, the thicknesses of lines, layers or regions may be exaggerated for clarity. Optional components may be illustrated using broken, dashed or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof.

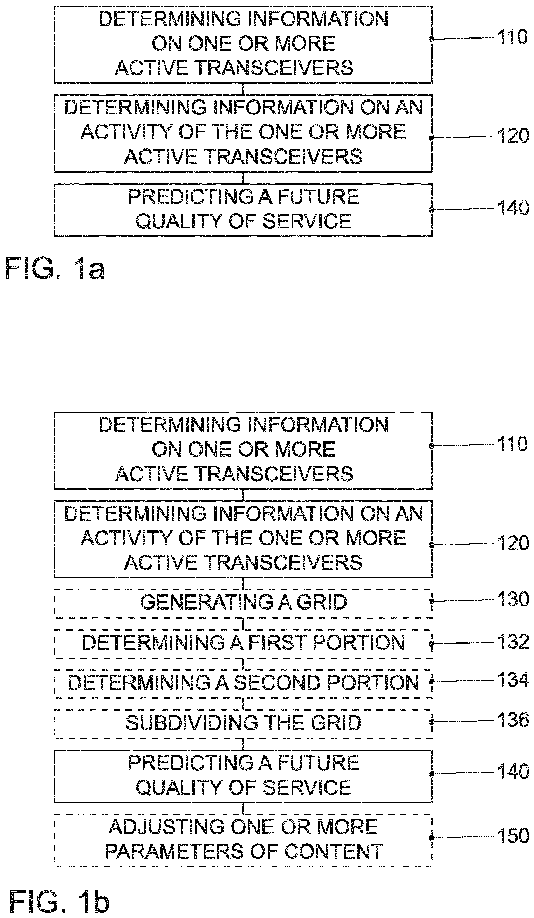

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein. The claimed invention corresponds to fig.1a, 1b and to the related text in the description, the other figures and the remaining text of the description are only intended to better explain the claimed invention.

Figs. 1a and 1b shows embodiments of a method for predicting a future quality of service of a wireless communication link between a mobile transceiver and a further mobile transceiver. The method comprises determining 110 information on one or more active transceivers in the environment of the mobile transceiver. The method comprises determining 120 information on an activity of the one or more active transceivers. The method comprises predicting 140 the future quality of service of the wireless communication link based on the activity of the one or more active transceivers. An activity of an active transceiver that is located closer to the further mobile transceiver receives less weight in the prediction of the future quality of service than an activity of an active transceiver that is located further away from the further mobile transceiver (and closer to the mobile transceiver, e.g. an active transceiver that is located closer to the mobile transceiver than to the further mobile transceiver). The method is performed by the mobile transceiver, e.g. by an apparatus of the mobile transceiver.

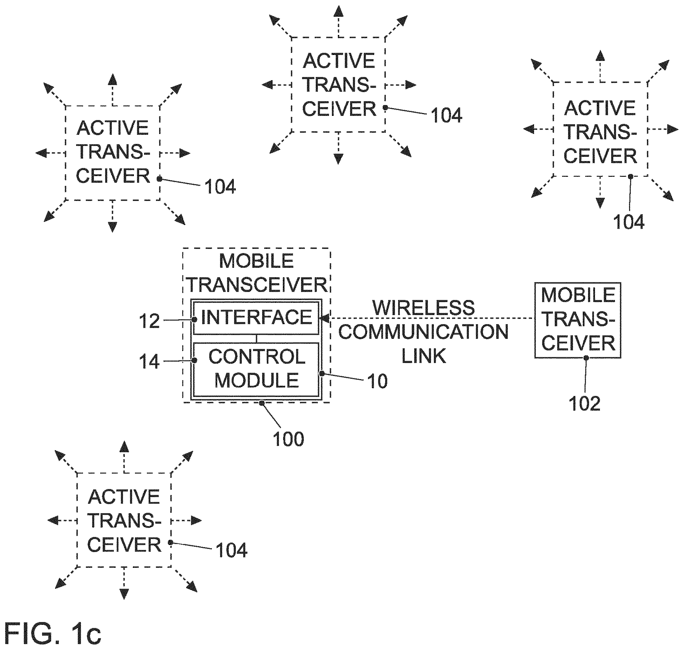

Fig. 1c shows an embodiment of a corresponding apparatus 10 for predicting a future quality of service of a wireless communication link between a mobile transceiver 100 and a further mobile transceiver 102. Fig. 1c further shows a mobile transceiver 100 comprising such an apparatus 10. In some embodiments, also the further mobile transceiver may comprise a similar apparatus 10. The apparatus comprises one or more interfaces 12 for communicating in a mobile communication system. The apparatus comprises a control module 14 that is coupled to the one or more interfaces. The control module 14 is configured to carry out the method according to Fig. 1a and/or 1b. For example, the mobile transceiver and/or the further mobile transceiver may be road users/vehicles, or may be mobile transceivers of a road user or vehicle, e.g. a wireless modem of a vehicle, or a smartphone of a pedestrian using the road. In general, the term "road user" may cover vehicles, such as automobiles, motorbikes, bicycles, e-scooters etc. and pedestrians, cyclists etc. as well.

The following description relates both to the method of Figs. 1a and/or 1b and to the corresponding apparatus of Fig. 1c.

Embodiments of the present disclosure relate to a method, apparatus and computer program for predicting a future quality of service of a wireless communication link between a mobile transceiver and a further mobile transceiver. In order to predict future service availability and QoS, it may be beneficial to have a sound understanding of the radio environment. Typical properties of the radio environment may be pathloss, interference conditions, the load of a system, number of frequency carriers, a number of radio access technologies (RATs), etc. The more detailed a radio environment is modelled, the higher the amount of information that is needed for its classification.

In wireless communication, the "hidden node" problem is present when a transmitter node relies on a listen-before-talk scheme in order to transmit wireless messages to other nodes. Even if the transmitter node (e.g. the further mobile transceiver) accounts for all of the transmissions it perceives, at a receiver node (e.g. the mobile transceiver), additional interference may be present from nodes that are not perceivable by the transmitter node. Consequently, the interference may prevent the receiver node from successfully receiving wireless transmissions from the transmitter node, even if the transmitter node has used a listen-before-talk scheme.

In order to reflect such scenarios, in a prediction of a future QoS of a specific wireless communication link between a transmitter node and a receiver node, embodiments of the present disclosure may use a weighting scheme to give more weight to active transceivers that might be hidden from the transmitter node.

Embodiments of the present disclosure thus relate to the prediction of a future QoS of a wireless communication link between the mobile transceiver and the further mobile transceiver. In particular, embodiments may relate to the prediction of a future QoS of the wireless communication link between the mobile transceiver and the further mobile transceiver for transmissions of the further mobile transceiver to the mobile transceiver. In other words, the future QoS of the wireless communication link may be specific for transmissions from the further mobile transceiver to the mobile transceiver. Consequently, the future QoS might not be symmetric for transmission from the mobile transceiver to the further mobile transceiver, and for transmissions from the further mobile transceiver to the mobile transceiver. Accordingly, the mobile transceiver may be denoted the "receiving mobile transceiver" or the "receiver mobile transceiver", and the further mobile transceiver may be denoted the "transmitting mobile transceiver" or the "transmitter mobile transceiver". In general, however, the roles may be reversed, e.g. if the mobile transceiver performs the prediction of the future QoS.

As has been laid out above, a future QoS of the wireless communication link is determined. In this context, the prefix "future" indicates, that the QoS is predicted for a point or span in time in the future. To achieve this, the activity of the one or more active transceivers may be predicted for the future (e.g. by extrapolating from past and present behavior of the one or more active transceivers), and the prediction of the future QoS may be based on the prediction of the future activity of the one or more active transceivers. The QoS being predicted may comprise one or more aspects, such as a predicted minimal, average and/or maximal data transmission rate on the wireless link (e.g. from the further mobile transceiver to the mobile transceiver), a minimal, average and/or maximal packet or bit error rate (e.g. for transmissions from the further mobile transceiver to the mobile transceiver), a minimal, average or maximal time between two successful transmissions of packets (e.g. from the further mobile transceiver to the mobile transceiver, also denoted packet inter-reception time, PIR), a minimal, average or maximal latency etc. In other words, the predicted QoS may indicate an expected performance and/or an expected reliability of the wireless link.

In embodiments, the future QoS of the wireless link may be predicted by the mobile transceiver, i.e. by the receiver of wireless transmissions on the wireless link. Accordingly, the method may be executed by the mobile transceiver, and/or the mobile transceiver may comprise the apparatus of Fig. 1c.

The method comprises determining 110 information on one or more active transceivers in the environment of the mobile transceiver. In general, one or both of the following approaches may be chosen:
1) Each vehicle may collect data about the positions of the other vehicles and the applications that are running on these vehicles along with the properties of these applications (transmission period, message size).

Accordingly, the method may comprise receiving wireless transmission of the one or more active transceivers. The mobile transceiver may receive wireless transmissions of the one or more active transceivers (e.g. other vehicles/transceivers). Based on the received wireless transmissions, the information on the one or more active transceivers may be determined.

For example, the wireless transmissions may comprise information on a location of the active transceiver having transmitted the respective wireless message. Accordingly, the information on the one or more active transceivers may comprise a location of the one or more active transceivers, and the method may comprise determining the information on the location of the one or more active transceivers based on the received wireless transmissions of the one or more active transceivers.

Additionally or alternatively, the wireless transmissions may comprise information on applications being executed by the active transceiver having transmitted the respective wireless message. Accordingly, the information on the one or more active transceivers may comprise information on applications (e.g. vehicular applications) being executed by the one or more active transceivers, and the method may comprise determining the information on the applications of the one or more active transceivers based on the received wireless transmissions of the one or more active transceivers.
2) The method may comprise receiving at least parts of the information on the one or more active transceivers from another mobile transceiver, e.g. from a mobile transceiver of the one or more active transceivers.

For example, after determining the information on the one or more active transceivers, the mobile transceivers may share the information with other mobile transceivers, e.g. by broadcasting the information on the one or more active transceivers. In other words, the method may comprise broadcasting the information on the one or more active transceivers to other mobile transceivers.

Based on the information collectively collected by the mobile transceivers, each mobile transceiver/vehicle may perform a prediction of the future QoS of wireless links it maintains with other mobile transceivers.

In embodiments, the information on the one or more active transceivers is used to determine information on an activity of the one or more active transceivers. In other words, the activity of the one or more active transceivers is derived from the information on the one or more active transceivers. The determining 120 of the information on the activity of the one or more active transceivers may comprise deriving or extracting the information on the activity of the one or more active transceivers from the information on the information on the one or more active transceivers. For example, the information on the activity of the one or more active transceivers may comprise information on frequency bands, RATs, and/or applications of radio activity of the one or more active transceivers.

In some cases, the information on the activity of the one or more active transceivers may be represented using a grid of the radio environment of the mobile transceivers. The grid may be generated by the mobile transceiver. In other words, the method may comprise generating 130 a grid of the radio environment of the mobile transceiver. In embodiments, the grid may have a fixed and finite size, i.e. it covers a pre-defined region and comprises a pre-defined number of cells. The grid may comprise a plurality of adjoining cells. For example, in some cases, the grid may be a two-dimensional rectangular grid. In other words, the cells of the grid may have a rectangular shape. Additionally, each cell of the grid may have (substantially) the same size/dimensions.

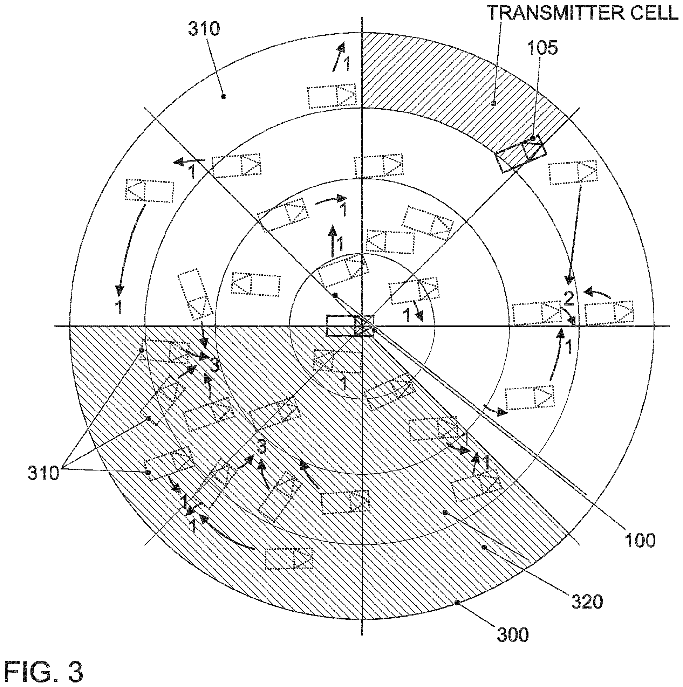

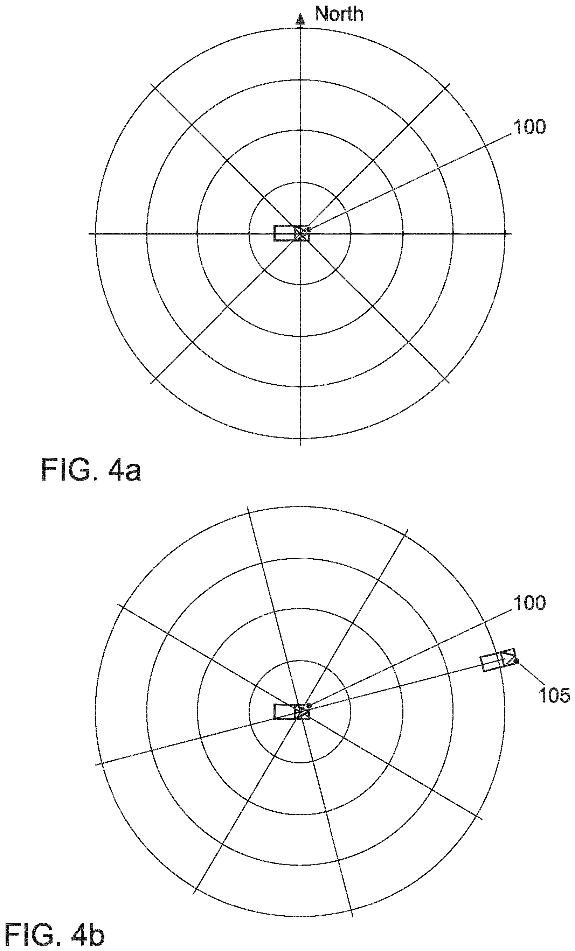

Alternatively, as shown in Figs. 3 and/or 4a; 4b, the grid may be a two-dimensional circular grid. In other words, the cells of the grid may be arranged in two or more rings around the mobile transceiver (e.g. the first dimension). For example, the width of the rings may be substantially the same for the two or more rings. Each ring surrounding the mobile transceiver may be subdivided into two or more cells, thus creating the second dimension. For example, each ring may be subdivided into 2 (or 4, or 6, or 8, or 12) cells. The cells of a ring may all have substantially the same size.

The information on the activity of the one or more active transceivers may be determined by indicating the activity of the one or more active transceivers per cell in the grid. In other words, the information on the activity of the one or more active transceivers may be determined by accumulating the activity of the one or more active transceivers for each cell of the grid.

Embodiments may thus use an abstraction model for the representation of the surrounding communicating/active vehicles (radio environment). This modelling method, also denoted grid generation method, may map an unbounded number of applications running on an unbounded number of vehicles (or mobile transceivers in general) to a fixed number of pieces of information. In the following embodiments it is assumed that the mobile transceiver is comprised in a vehicle and the one or more active transceivers are further road users. However, in embodiments in general mobile transceivers in a radio environment may be used. There are at least two ways to use the proposed model:
1. Use it as a dissemination format to share the collected information with the surrounding vehicles (new message for sharing information about the communicating environment). The above-described grid generation method may then comprise transmitting information on the grid to another transceiver (other vehicle or network entity). Additionally or alternatively, the grid generation method may comprise receiving information on a grid from another mobile transceiver.
2. Use it as a way to process un-abstracted information (i.e. raw information, or information that has not been processed and has just been collected or received).

The former may have the advantage of reducing the amount of transmitted data but the disadvantage of not letting operate the projection of the data in the future as the information about the single vehicles (such as speed, trajectory etc.) has been lost in the modelling. The latter has inverse properties, that is that it contains all relevant information but represents a larger amount of data to be transmitted. This dichotomy between option 1 and option 2 is similar to the problem of sending abstract objects or raw sensor data in sensor sharing.

Option one, at least in some embodiments, may be equivalent to the following grid-generation method:
1) Each vehicle collects data about the positions of the other vehicles and the applications that are running on these vehicles along with the properties of these applications (transmission period, message size). The determining of the information related to the one or more active transceivers may then comprise receiving messages from the one or more active transceivers (other vehicles/ transceivers).
2) Each vehicle may perform the grid generation method to format the data in some embodiments.
3) Each vehicle may broadcast the data.
4) Each receiving vehicle may perform a prediction of a link quality of service using the received data.

Option two, at least in some embodiments, may be equivalent to the following grid generation method:
1) Each vehicle may collect data about the positions of the other vehicles and the applications that are running on these vehicles along with the properties of these applications (transmission period, message size). The grid generation method may then comprise an according message exchange between the vehicles as outlined above.
2) Each vehicle may broadcast the (raw) data.
3) Each receiving vehicle may perform the proposed method 10 on the received data and may run a link quality of service prediction as part of the method 10.

The grid generation method may be implemented as a distributed and/or decentralized method 10. For example, it may run on each vehicle equipped with a communication system and information may be exchanged with all the surrounding vehicles. In the following, focus will be on one vehicle, the ego vehicle, that will receive information from all other vehicles.

In the following, the determination of the information on the activity is shown for an example. For example, the mobile transceiver may perform the method with the following characteristics of the surrounding vehicles:
- Position (relative or absolute location),
- Planned trajectory (waypoints with timestamps, route reference, i.e. follow a certain road for 10km with the traffic flow, etc.)
- List of transmitted messages with Type / Size (traffic class, delay tolerance), Periodicity (message frequency) and Technology (RAT, frequency, carrier, etc.)

The source of this information can be deduction through the received messages (if a cooperative awareness message (CAM) and a cooperative perception message (CPM) are received from vehicle X, its position, as well as its two running applications may become known), and
- A specific message (vehicle X transmits a message containing the aforementioned information (position, planned trajectory, list of running applications /running messages).

Using this array of inputs, the vehicle may perform the method and may create a multi-layer grid abstraction.
1. It may establish a list of surrounding vehicles and, using the received positions, places these vehicles in a coordinates frame around its own position.
2. It may use a grid like system (e.g. a regular or irregular pattern of cells covering its surrounding) and replaces the surrounding vehicles by multiple applications together with their properties. The indicating of the activity of the one or more active transceivers per cell in the grid may comprise assigning the one or more transceivers to one or more cells of the grid based on the locations of the one or more transceivers. For example, the grid may be formed like a mesh of equal-size cells which determines a limited number of cells surrounding the vehicle. The transceivers in the surrounding may be assigned to cells of the grid 250.

For instance, if one vehicle X is running three applications, CAM 400B @ 10 Hz on 11p, AM (application A message) 700B @ 10 Hz on 11p, CM (Application C message) 400B @ 20 Hz on 5G, three points will be placed at vehicle X position. Aside from the above-mentioned CAM and CPM applications general applications A, B, and C may be assumed (with messages AM, BM, CM), which may correspond to any conceivable application. Such information sets may also be determined for the other transceivers. For example, if a cell comprises two transceivers, their information sets can be merged, taking the abstraction level away from the transceiver-level and towards the cell level.

In some embodiments, the indicating of the activity of the one or more active transceivers per cell in the grid may comprise assigning information on a transmission frequency of activity to the cells of the grid (i.e. information on the frequency of the messages). Moreover, the indicating of the activity of the one or more active transceivers per cell in the grid may comprise assigning information on one or more message sizes transmitted by the one or more active transceivers to the cells of the grid.

In various embodiments, multiple layers of the grid can be separated, e.g. one per pair of technology (application and RAT). For example, the indicating of the activity of the one or more active transceivers per cell in the grid may comprise assigning information on frequency bands, RATs, and/or applications of radio activity to the cells of the grid. For example, a separation of different Radio Access Technologies may be performed, e.g. for three different RATs 802.11p, LTE and 5G, or a separation of different frequencies. For example, the grids may be different for each RAT/frequency, or they may be the same, e.g. if the active transceivers all use multiple RATs/frequencies.

For example, each layer may be divided in a grid. In embodiments, the method may further comprise counting a number of applications running in each cell and store these numbers along with the average of the periodicity together with the average of the message size, weighted by the sending rates. These two averages describe the channel occupancy at the nodes. This is a further abstraction/compression step in at least some embodiments, where the information is reduced from the vehicle level to the cell level. In an example, three applications may be active. The first transmits 400B messages at 9Hz, the second transmits 400B messages at 2Hz, and the third transmits 700B messages at 10Hz. The average message size would then be (400*9+400*2+700*10)/(9+2+10)=542.85B. The average message frequency would be (9+2+10)/3=7Hz. The indicating of the activity of the one or more active transceivers per cell in the grid may hence comprise assigning average information on message sizes and transmission frequencies of the messages transmitted by the one or more active transceivers to the cells of the grid. This information may be used to represent a radio activity of a cell.

For example, the method 10 may gather the cell information in an array of fixed size, that can be used as input to a prediction model and/or broadcasted. For example, the array of fixed size may comprise coordinates of the cells of the grid (X, Y), the RAT, the number of nodes, an average message size, and an average message frequency.

The resulting multi-layer grid may represent the current situation. The determining of the information on the one or more active transceivers may comprise determining trajectories for the one or more active transceivers/users. A future grid may be predicted based on the information on the trajectories of the one or more active users. A future quality of service of a radio service of the mobile transceiver may be further predicted based on the grid. Using the received trajectories as well as the ego trajectory, the model may be projected to describe future communication conditions. This may also be performed for multiple time increments, in which case the two-dimensional (space) array of may have a third dimension, time. Examples have shown three technologies (11p, LTE, 5G), the concept may as well be applied to single technologies (simple grid aggregation) or to more complex combinations.

The method further comprises predicting 140 the future quality of service of the wireless communication link based on the activity of the one or more active transceivers. For example, the method may comprise predicting a future quality of service of a radio service of the mobile transceiver based on the grid. For example, the radio service may be implemented by the wireless link between the further mobile transceiver and the mobile transceiver. A hidden node problem is considered in the prediction of the future quality of service. For example, the hidden node problem is considered in the prediction of the future quality of service such, that an activity of an active transceiver that is located closer to the further mobile transceiver receives less weight in the prediction of the future quality of service than an activity of an active transceiver that is located further away from the further mobile transceiver. An active transceiver that is located closer to the further mobile transceiver is less likely to be hidden towards the further mobile transceiver than an active transceiver that is located further away, warranting the different weighting of the different active transceivers.

In general, the future QoS of the wireless link may be predicted by considering the activity of (all of) the one or more active transceivers. In embodiments, the activity of different active transceivers is weighted differently in the prediction of the future QoS, in order to address the hidden node problem. In this context, the term "receives more/less weight" indicates, that the activity of one active transceiver or cell of the grid is counted more/less strongly in the prediction of the future QoS. This may be done explicitly, e.g. by assigning numerical weights to the activity of different active transceivers/cells, or implicitly, e.g. by using a statistical model or machine-learning model to predict the future QoS. In other words, the weights assigned to the activity of the respective cells (or of the respective active transceivers) may be inherent to a machine-learning model used to predict the future quality of service. For example, the weights may be represented by the weights assigned to pathways between neurons of a neural network implementing the machine-learning model. Alternatively, the weights may be assigned to the activity of the respective cells based on a statistical model. In some embodiments, the method may comprise training the machine-learning model, e.g. by using the information on the activity of the one or more active transceivers as training input and using a measured QoS of the wireless communication link as desired output. For example, supervised learning may be used to train the machine-learning model.

In various embodiments, the mobile transceiver may sub-divide its environment into two or more (i.e. a plurality of) regions (which may be implemented by portions of the grid), and assign the weights for the prediction of the future QoS according to these regions. Each region may have a weighting factor that is associated with the region of the environment. In other words, the environment of the mobile transceiver may comprise (at least) a first region and a second region. The method may thus comprise determining a first region and a second region within the environment of the mobile transceiver (e.g. a first portion and a second portion of the grid). The first region may be located on a side of the mobile transceiver facing the further mobile transceiver, e.g. between the mobile transceiver and the further mobile transceiver, and extending beyond the further mobile transceiver. The further mobile transceiver may be located within the first region. The second region may be located on a side of the mobile transceiver facing away from the further mobile transceiver (e.g. such that the mobile transceiver is located between the second region and the further mobile transceiver). An activity of a first active transceiver that is located within the first region receives less weight in the prediction of the future quality of service than an activity of a second active transceiver that is located within the second region. For example, the second region may be located further away from the further mobile transceiver than the first region.

The determination of the regions may be based on the grid, on which the activity of the active transceivers is indicated. Accordingly, the method may comprise determining 132 a first portion of the grid that is located closer to the further mobile transceiver (e.g. corresponding to, or intersecting with, the first region). The method may comprise determining 134 a second portion of the grid that is located further away from the further mobile transceiver (e.g. corresponding to, or intersecting with, the second region). Active transceivers in the second portion of the grid (e.g. within the second region) may have a higher probability of being hidden vis-à-vis the further mobile transceiver than active transceivers in the first portion of the grid (e.g. within the first region). The future quality of service of the wireless communication link may be predicted 140 based on the activity that is indicated per cell in the grid. In other words, the future quality of service of the wireless communication link may be predicted based on an aggregated activity of the mobile transceivers that are located within a cell of the grid. An (aggregated) activity within a cell of the first portion of the grid may receive less weight in the prediction of the future quality of service than an (aggregated) activity within a cell of the second portion of the grid.

In some cases, it may be beneficial, to use not only two, but a plurality of regions with different weights. So, in more general terms, the method may comprise subdividing 136 the grid into a plurality of portions. For example, the plurality of portions may comprise more than two portions, e.g. at least three portions, at least four portions, at least five portions, at least eight portions etc.). The plurality of portions may comprise the first and second portion. Each portion of the plurality of portions may be assigned a (different) weighting factor. The method may comprise weighting the activity per cell of the grid based on the portion the cell is assigned to. The method may comprise predicting the future quality of service of the wireless communication link based on the weighted activity per cell of the grid.

In some embodiments, the grid may be aligned with the direction of the vehicle comprising or corresponding to the mobile transceiver. In some embodiments, however, the grid may be aligned along the direction of communication between the mobile transceiver and the further mobile transceiver, which may facilitate the subdivision of the grid into the two or more portions. In other words, the grid may be aligned with an imaginary line between the mobile transceiver and the further mobile transceiver. The first and the second portions of the grid may be determined based on a pre-determined assignment of cells of the grid to the first and second portions of the grid. For example, a pre-defined portion of the grid may be assigned as the first portion of the grid, and a further pre-defined portion of the grid may be assigned as the second portion of the grid. The assignment between cells of the grid and the portions of the grid may further indicate the respective weighting factors to be used for the cells/portion of the grid.

This may be performed for more than one wireless communication link between the mobile transceiver and a further mobile transceiver. For example, the future QoS may be predicted for a plurality of wireless communication links between the mobile transceiver and a plurality of further mobile transceivers. Accordingly, the method may comprise predicting 140 the future quality of service of the plurality of wireless communication links between the mobile transceiver and a plurality of further mobile transceivers based on the activity of the one or more active transceivers. Not every wireless communication of the mobile transceiver might warrant such a determination. For example, for infrequent or low-priority communications, the prediction of the future QoS may take away processing capacity from more important tasks. Instead, the plurality of wireless communication links may be wireless communication links that are used for regular, frequent, repeated, data transmission capacity-critical and/or delay-critical communication of the mobile transceiver, e.g. for tele-operated driving, coordinated driving, transmission of perception/sensor data and the like. For each of the plurality of further mobile transceivers, the prediction of the future QoS may be performed separately. Accordingly, for each further mobile transceiver of the plurality of further mobile transceivers, an activity of an active transceiver that is located closer to the further mobile transceiver may receive less weight in the prediction of the future quality of service of the respective wireless communication link than an activity of an active transceiver that is located further away from the further mobile transceiver.

Another factor that may be used to predict the future QoS is the distance between the mobile transceiver and the further mobile transceiver - the further apart the two mobile transceivers are, the more likely it is, that the hidden node problem occurs. Furthermore, the further apart the two mobile transceivers are, the higher is a path loss between the two mobile transceivers. Accordingly, the future quality of service of the wireless communication link may be further based on a distance between the further mobile transceiver and the mobile transceiver.

After predicting the future QoS, the result may be used to adjust the communication being performed on the wireless communication link. In other words, the method may comprise adjusting 150 one or more parameters of a content being transmitted over the wireless communication link based on the predicted further quality of service of the wireless communication link. For example, the method may comprise adjusting at least one of a data transmission rate of the content, an amount of redundancy provided within the content, an amount of buffering performed, a size of packets of content etc. Alternatively or additionally, the result may be used to adapt the vehicular application, e.g. by increasing the inter-vehicle distance in a platoon when the future QoS is estimated to drop.

At least some embodiments are based on using a machine-learning model or machine-learning algorithm. Machine learning refers to algorithms and statistical models that computer systems may use to perform a specific task without using explicit instructions, instead relying on models and inference. For example, in machine-learning, instead of a rule-based transformation of data, a transformation of data may be used, that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number of training images and associated training content information, the machine-learning model "learns" to recognize the content of the images, so the content of images that are not included of the training images can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model.

Machine-learning algorithms are usually based on a machine-learning model. In other words, the term "machine-learning algorithm" may denote a set of instructions that may be used to create, train or use a machine-learning model. The term "machine-learning model" may denote a data structure and/or set of rules that represents the learned knowledge, e.g. based on the training performed by the machine-learning algorithm. In embodiments, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of the sum of its inputs. The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e. to achieve a desired output for a given input. In at least some embodiments, the machine-learning model may be deep neural network, e.g. a neural network comprising one or more layers of hidden nodes (i.e. hidden layers), preferably a plurality of layers of hidden nodes.

The apparatus 10 and the mobile transceiver 100; 105 (e.g. the vehicles or entities) may communicate through a mobile communication system. The mobile communication system may, for example, correspond to one of the Third Generation Partnership Project (3GPP)-standardized mobile communication networks, where the term mobile communication system is used synonymously to mobile communication network. The messages (input data, measured data, control information) may hence be communicated through multiple network nodes (e.g. internet, router, switches, etc.) and the mobile communication system, which generates delay or latencies considered in embodiments.

The mobile or wireless communication system may correspond to a mobile communication system of the 5th Generation (5G, or New Radio) and may use mm-Wave technology. The mobile communication system may correspond to or comprise, for example, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

Service provision may be carried out by a network component, such as a base station transceiver, a relay station or a UE, e.g. coordinating service provision in a cluster or group of multiple UEs/vehicles. A base station transceiver can be operable or configured to communicate with one or more active mobile transceivers/vehicles and a base station transceiver can be located in or adjacent to a coverage area of another base station transceiver, e.g. a macro cell base station transceiver or small cell base station transceiver. Hence, embodiments may provide a mobile communication system comprising two or more mobile transceivers/vehicles 100; 105 and one or more base station transceivers, wherein the base station transceivers may establish macro cells or small cells, as e.g. pico-, metro-, or femto cells. A mobile transceiver or UE may correspond to a smartphone, a cell phone, a laptop, a notebook, a personal computer, a Personal Digital Assistant (PDA), a Universal Serial Bus (USB) -stick, a car, a vehicle, a road participant, a traffic entity, traffic infrastructure etc. A mobile transceiver may also be referred to as User Equipment (UE) or mobile in line with the 3GPP terminology.

A base station transceiver can be located in the fixed or stationary part of the network or system. A base station transceiver may be or correspond to a remote radio head, a transmission point, an access point, a macro cell, a small cell, a micro cell, a femto cell, a metro cell etc. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a gNodeB, a Base Transceiver Station (BTS), an access point, a remote radio head, a relay station, a transmission point, etc., which may be further subdivided in a remote unit and a central unit.

A mobile transceiver or vehicle 100 can be associated with a base station transceiver or cell. The term cell refers to a coverage area of radio services provided by a base station transceiver, e.g. a NodeB (NB), an eNodeB (eNB), a gNodeB, a remote radio head, a transmission point, etc. A base station transceiver may operate one or more cells on one or more frequency layers, in some embodiments a cell may correspond to a sector. For example, sectors can be achieved using sector antennas, which provide a characteristic for covering an angular section around a remote unit or base station transceiver. In some embodiments, a base station transceiver may, for example, operate three or six cells covering sectors of 120° (in case of three cells), 60° (in case of six cells) respectively. A base station transceiver may operate multiple sectorized antennas. In the following a cell may represent an according base station transceiver generating the cell or, likewise, a base station transceiver may represent a cell the base station transceiver generates.

The apparatus 10 may be comprised in a server, a base station, a NodeB, a UE, a mobile transceiver, a relay station, or any service coordinating network entity in embodiments. It is to be noted that the term network component may comprise multiple sub-components, such as a base station, a server, etc.

In embodiments the one or more interfaces 12 may correspond to any means for obtaining, receiving, transmitting or providing analog or digital signals or information, e.g. any connector, contact, pin, register, input port, output port, conductor, lane, etc. which allows providing or obtaining a signal or information. An interface may be wireless or wireline and it may be configured to communicate, i.e. transmit or receive signals, information with further internal or external components. The one or more interfaces 12 may comprise further components to enable according communication in the mobile communication system, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc. The one or more interfaces 12 may be coupled to one or more antennas, which may correspond to any transmit and/or receive antennas, such as horn antennas, dipole antennas, patch antennas, sector antennas etc. The antennas may be arranged in a defined geometrical setting, such as a uniform array, a linear array, a circular array, a triangular array, a uniform field antenna, a field array, combinations thereof, etc. In some examples the one or more interfaces 12 may serve the purpose of transmitting or receiving or both, transmitting and receiving, information, such as information, input data, control information, further information messages, etc.

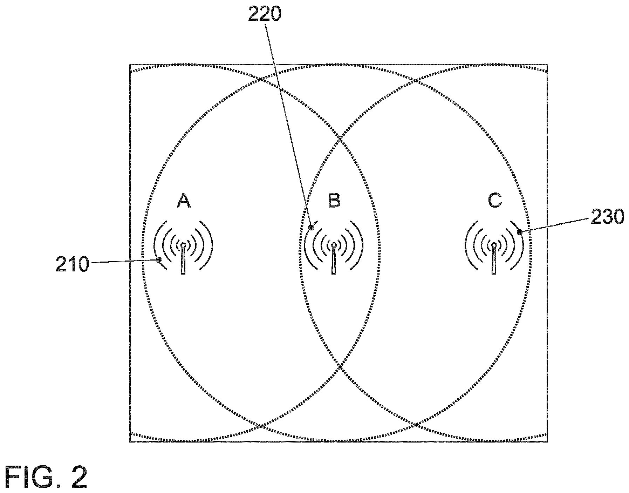

As shown in Fig. 2 the respective one or more interfaces 12 is coupled to the respective control module 14 at the apparatus 20. In embodiments the control module 14 may be implemented using one or more processing units, one or more processing devices, any means for processing, such as a processor, a computer or a programmable hardware component being operable with accordingly adapted software. In other words, the described functions of the control module 14 may as well be implemented in software, which is then executed on one or more programmable hardware components. Such hardware components may comprise a general-purpose processor, a Digital Signal Processor (DSP), a micro-controller, etc.

In embodiments, communication, i.e. transmission, reception or both, may take place among mobile transceivers/vehicles 100; 105 directly, e.g. forwarding input data or control information to/from a control center. Such communication may make use of a mobile communication system. Such communication may be carried out directly, e.g. by means of Device-to-Device (D2D) communication. Such communication may be carried out using the specifications of a mobile communication system. An example of D2D is direct communication between vehicles, also referred to as Vehicle-to-Vehicle communication (V2V), car-to-car, Dedicated Short Range Communication (DSRC), respectively. Technologies enabling such D2D-communication include 802.11p, 3GPP systems (4G, 5G, NR and beyond), etc.

In embodiments, the one or more interfaces 12 can be configured to wirelessly communicate in the mobile communication system. In order to do so radio resources are used, e.g. frequency, time, code, and/or spatial resources, which may be used for wireless communication with a base station transceiver as well as for direct communication. The assignment of the radio resources may be controlled by a base station transceiver, i.e. the determination which resources are used for D2D and which are not. Here and in the following radio resources of the respective components may correspond to any radio resources conceivable on radio carriers and they may use the same or different granularities on the respective carriers. The radio resources may correspond to a Resource Block (RB as in LTE/LTE-A/LTE-unlicensed (LTE-U)), one or more carriers, sub-carriers, one or more radio frames, radio sub-frames, radio slots, one or more code sequences potentially with a respective spreading factor, one or more spatial resources, such as spatial sub-channels, spatial precoding vectors, any combination thereof, etc. For example, in direct Cellular Vehicle-to-Anything (C-V2X), where V2X includes at least V2V, V2-Infrastructure (V2I), etc., transmission according to 3GPP Release 14 onward can be managed by infrastructure (so-called mode 3) or run in a UE.

More details and aspects of the method, apparatus or mobile transceiver are mentioned in connection with the proposed concept or one or more examples described above or below (e.g. Fig. 2 to 3b). The method, apparatus or mobile transceiver may comprise one or more additional optional features corresponding to one or more aspects of the proposed concept or one or more examples described above or below.

Embodiments of the present disclosure relate to a prediction of packet inter reception time considering hidden nodes problem with surrounding communicating traffic modelling.

Fig. 2 shows a schematic diagram of the hidden node problem. One of the sources of packet drop is the hidden node problem, where a node creating interferences (node A 210 in Fig. 2) at the receiver (B 220) is not detectable by the transmitter (C 230), making the sensing of the channel inefficient against the undetected node.

Embodiments of the present disclosure address the question of how to capture the hidden node problems with the modelling of the surrounding communication environment. Other approaches may provide ways of modeling the interfering environment and the channel load but lack incorporating the hidden node problem

In particular, some systems present a method for abstracting in details the communication environment for multiple RATs in which a grid is used to represent different information about the communicating environment (positions, transmission frequency, radio access technology, size of the messages). The hidden node problem occurs when the interfering node is out of reach of the transceiver. Thus, a receiver can use the communication environment model of such a system, and combine it with an approach that is based on path loss. When applied to the PQoS (Predicted QoS) on a single link, they do not capture the hidden node problem. Embodiments of the present disclosure address this issue.

The prediction method can run on the receiver (e.g. the mobile transceiver) in order to predict the PQoS (packet inter reception time for instance, or packet error rate) of a link with a transceiver (e.g. the further mobile transceiver). To include the hidden node problem in this modelling, embodiments may include the position of the transmitter in the abstract modelling.

Embodiments of the present disclosure may thus provide a method comprising the following features:
1. determining information on one or more active transceivers in the environment of the mobile transceiver;
2. generating a grid of the radio environment of the mobile transceiver, the grid comprising a plurality of adjoining cells;
3. indicating an activity of the one or more active transceivers per cell in the grid;
4. Identifying the cell corresponding to the transmitter (i.e. the further mobile transceiver)
5. Giving more weights to the cells that are located in the opposite side with respect to the receiver (e.g. the active transceivers being located further away from the further mobile transceiver)
6. Using these weights to predict the link PQoS (e.g. the future QoS of the wireless communication link) between the transmitter and the receiver (i.e. the mobile transceiver).

Fig. 3 shows a schematic diagram of vehicular mobile transceivers sharing the same environment. Fig. 3 shows the mobile transceiver 100 (i.e. the receiver vehicle/ego vehicle), the further mobile transceiver 105 (i.e. the transmitter vehicle), and a plurality of active transceivers 310 (interference vehicles). A first portion 320 of the grid 300 is located closer to the further mobile transceiver 105 (and receives less weight), and a second portion 330 of the grid is located further away from the further mobile transceiver 105 (and receives more weight). Fig. 3 further shows the cell of the transmitter.

For example, the weights allocation (e.g. feature 5, or the corresponding feature of the method of Figs. 1a and/or 1b) can be the result of a statistical method fitting. The weights (e.g. feature 5, or the corresponding feature of the method of Figs. 1a and/or 1b) may also be influenced by the distance to the transmitter cell. In feature 5, more weights are given to the opposite cells as they are more likely to be "hidden" to the transmitter, thus capturing the hidden nodes problem. Feature 5 and 6 (e.g. the corresponding features of the method of Figs. 1a and/or 1b) can be performed at once in a statistical method fitting or machine learning. The link PQoS (e.g. the predicted QoS of the wireless communication link) can be the link PQoS indicator of the packet inter-reception time, packet error rate, latency, etc. Feature 6 may also be the prediction of the distribution of the PQoS indicator.

Additionally, the purpose of the grid may be to be the input of a prediction model for a link PQoS. One preferable characteristic of the abstraction model may then be to limit the number of input features (here the number of cells). Therefore, a reduction effort may be included in the design of the grid. Embodiments may use a "fan shaped grid" model (e.g. a two-dimensional circular grid) (see Figs. 3, 4a and/or 4b), which reduces the number of cells whilst keeping an indication of the direction of the hidden nodes.

Regarding the orientation of the grid, two alternatives offer different advantages:
1. Keeping one arbitrary direction (driving direction or north). It has the advantage of performing the features 1-3 only once, but the features 4-6 may be repeated for each link (Fig. 4a)
2. Using the Tx-Rx direction. It has the advantage of keeping the same "opposite cells", along with the distance between Tx and Rx the only parameter that might be accounted for, but the features 1-3 may be performed at each time step (Fig. 4b).

Figs. 4a and 4b show schematic diagrams of an alignment of two two-dimensional circular grids.

For example, the method may be performed before each prediction step, for each transmitter. The method can be used with "future" input in order to perform forecasting. The output of this method can then be used in an agile quality of service adaptation system (AQoSA).

More details and aspects of the method are mentioned in connection with the proposed concept or one or more examples described above or below (e.g. Fig. 1a to 1c). The method may comprise one or more additional optional features corresponding to one or more aspects of the proposed concept or one or more examples described above or below.

As indicated above, a grid of the radio environment may be used as input to the prediction of the future QoS. This grid may be generated according to the following grid generation method. Embodiments are based on the finding that information exchanged between vehicles may contain positions of the vehicles, frequency of the used radio, transmission rate and size of messages. Prediction models may apply statistical methods taking information about the surrounding environment as input. A majority of the statistical models used to predict a future QoS are restricted to a fixed number of inputs. For instance, a vector of predictors in a linear regression may have a fixed size. Another instance is the feature space of a support vector machine or multi-layer perceptron regressor, which is strictly defined in the design of the grid generation method. This may limit the applicability of these models to real life scenarios, where the number of surrounding communicating vehicles/devices can vary from 0 to thousands. At the same time, each vehicle may run varying numbers of applications. Additionally, the spatial distribution of these vehicles has a large influence on the results, requiring some ordering or abstraction. It is a finding that information on a radio environment determined at a mobile transceiver or vehicle may be generalized by introducing a spatial grid of cells. Information on the radio environment may be represented on a cell basis and hence activities of devices may be summarized per cell. Scalability of the information on the radio environment may now be determined by the number of cells (or spatial cell resolution) rather than by the number of active devices.

In order to predict future service availability and QoS, it may be crucial to have a sound understanding of the radio environment. Typical properties of the radio environment may be pathloss, interference conditions, the load of a system, number of frequency carriers, a number of radio access technologies (RATs), etc. The more detailed a radio environment is modelled, the higher the amount of information that is needed for its classification. If information on a radio environment is communicated among transceivers of a mobile communication system, the amount of information needed to represent the radio environment contributes to a signaling load of the system. Embodiments may use an abstraction model, which allows to efficiently communicate and model a radio environment.

Embodiments provide a grid generation method for determining a representation of a radio environment of a mobile transceiver. The grid generation method comprises determining information on one or more active transceivers in the environment of the mobile transceiver. The grid generation method comprises generating a grid of the radio environment of the mobile transceiver. The grid comprises a plurality of adjoining cells. The grid generation method further comprises indicating an activity of the one or more active transceivers per cell in the grid. Embodiments therewith enable a more efficient representation of radio environment activities.

The determining of the information may comprise receiving messages from the one or more active transceivers. Embodiments may make use of messages exchanged between vehicles for traffic management purposes to derive the grid.

The grid generation method may comprise receiving information on a grid from another mobile transceiver. Embodiments may enhance the determination of activities in the radio environment by considering observations from surrounding transceivers.

In some embodiments the grid generation method further comprises transmitting information on the grid to another transceiver. Embodiments may enable a sharing mechanism for radio environment modeling of different transceivers.

The indicating may comprise assigning the one or more transceivers to one or more cells of the grid based on the locations of the one or more transceivers. Data compression may be achieved by assigning active radio sources to the cells of the grid and represent the radio environment by the grid.

For example, the indicating may comprise assigning information on frequency bands and/or radio access technologies of radio activity to the cells of the grid. Per cell of the grid activities may be further summarized per frequency band or RAT. Information may be represented more efficiently by considering only frequency bands/RATs with activity and skipping non-active frequency bands/RATs.

At least in some embodiments the indicating may comprise assigning information on a transmission frequency of radio activity to the cells of the grid. Information may be further compressed by representing multiple transceivers using the same frequency band by the respective frequency band.

Furthermore, the indicating may comprise assigning information on one or more message sizes transmitted by the one or more active transceivers to the cells of the grid. The message sizes may contribute to a more reliable prediction of an activity in a cell of the grid.

The indicating may further comprise assigning average information on messages sizes and transmission frequencies of the messages transmitted by the one or more active transceivers to the cells of the grid. Assigning averaged quantities to the cells may contribute to efficient representation of the radio environment.

In some further embodiments the mobile transceiver may be comprised in a vehicle and the one or more active transceivers may be further road users. Embodiments may particularly enable an efficient radio environment representation in the vehicular or traffic environment.

For example, the determining may comprise determining trajectories for the one or more active users. A prediction of a future radio situation may be enhanced by considering trajectories of the active radio transceivers.

Moreover, the grid generation method may comprise predicting a future grid based on the information on the trajectories of the one or more active users. A prediction of the future grid may further enhance radio communication.

Another embodiment is an apparatus for a mobile transceiver of a mobile communication system. The apparatus comprises one or more interfaces for communicating in a mobile communication system and a control module configured to carry out or perform one of the methods described herein.

A vehicle comprising the apparatus is yet another embodiment.

Embodiments further provide a computer program having a program code for performing one or more of the described methods, when the computer program is executed on a computer, processor, or programmable hardware component. A further embodiment is a computer readable storage medium storing instructions which, when executed by a computer, processor, or programmable hardware component, cause the computer to implement one of the methods described herein.

Embodiments of the grid generation method may solve the problem of large and varying numbers of inputs by reducing the information from the vehicle level to a grid cell level. The number of grid cells being fixed, embodiments may design one single link quality of service prediction method. Because the grid representation still captures the position of the other vehicles relative to the position of the ego vehicle position, the spatial distribution of the surrounding vehicles is described by the grid as well. The spatial distribution of the surrounding communicating vehicles may be a key for the prediction of the link quality of service. Indeed, far away vehicles will not have as much impact as close vehicles. Moreover, depending on the positions of these surrounding nodes and the positions of the transmitter and the receiver, the hidden node problem may have an impact on the quality of service.

As already mentioned, in embodiments the respective methods may be implemented as computer programs or codes, which can be executed on a respective hardware. Hence, another embodiment is a computer program having a program code for performing at least one of the above methods, when the computer program is executed on a computer, a processor, or a programmable hardware component. A further embodiment is a computer readable storage medium storing instructions which, when executed by a computer, processor, or programmable hardware component, cause the computer to implement one of the methods described herein.

A person of skill in the art would readily recognize that steps of various above-described methods can be performed by programmed computers, for example, positions of slots may be determined or calculated. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, Digital Signal Processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

It is further to be noted that methods disclosed in the specification or in the claims may be implemented by a device having means for performing each of the respective steps of these methods.

### List of reference signs

- 10: Apparatus
- 12: Interface
- 14: Control module
- 100: Mobile transceiver
- 105: Further mobile transceiver
- 110: Determining information on one or more active transceivers
- 120: Determining information on an activity
- 130: Generating a grid
- 132: Determining a first portion of the grid
- 134: Determining a second portion of the grid
- 136: Subdividing the grid
- 140: Predicting the future quality of service
- 150: Adjusting one or more parameters of a content
- 210: Node A
- 220: Node B
- 230: Node C
- 300: Grid
- 310: Plurality of active transceivers
- 320: First portion of the grid
- 330: Second portion of the grid

## Claims

1. A method for predicting a future quality of service of a wireless communication link between a mobile transceiver and a further mobile transceiver, the method comprising:
determining (110) information on one or more active transceivers in the environment of the mobile transceiver;
determining (120) information on an activity of the one or more active transceivers, the activity of the one or more active transceivers being activity with respect to wireless transmissions; and
predicting (140) the future quality of service of the wireless communication link based on the activity of the one or more active transceivers, **characterized in that** an activity of an active transceiver that is located closer to the further mobile transceiver receives less weight in the prediction of the future quality of service than an activity of an active transceiver that is located further away from the further mobile transceiver.

2. The method according to claim 1, wherein the environment of the mobile transceiver comprises a first region and a second region, the first region being located on a side of the mobile transceiver facing the further mobile transceiver, the second region being located on a side of the mobile transceiver facing away from the further mobile transceiver, wherein an activity of a first active transceiver that is located within the first region receives less weight in the prediction of the future quality of service than an activity of a second active transceiver that is located within the second region.

3. The method according to one of the claims 1 or 2, wherein the future quality of service of the wireless communication link is further based on a distance between the further mobile transceiver and the mobile transceiver.

4. The method according to one of the claims 1 to 3, comprising generating (130) a grid of the radio environment of the mobile transceiver, the grid comprising a plurality of adjoining cells, wherein the information on the activity of the one or more active transceivers is determined by indicating the activity of the one or more active transceivers per cell in the grid.

5. The method according to claim 4, comprising determining (132; 134) a first portion of the grid that is located closer to the further mobile transceiver, and a second portion of the grid that is located further away from the further mobile transceiver, wherein the future quality of service of the wireless communication link is predicted (140) based on the activity that is indicated per cell in the grid, wherein an activity within a cell of the first portion of the grid receives less weight in the prediction of the future quality of service than an activity within a cell of the second portion of the grid.

6. The method according to claim 5, wherein the grid is aligned with an imaginary line between the mobile transceiver and the further mobile transceiver, wherein the first and the second portions of the grid are determined based on a pre-determined assignment of cells of the grid to the first and second portions of the grid.

7. The method according to one of the claims 5 or 6, wherein active transceivers in the second portion of the grid have a higher probability of being hidden vis-à-vis the further mobile transceiver than active transceivers in the first portion of the grid.

8. The method according to one of the claims 5 to 7, wherein the method comprises subdividing (136) the grid into a plurality of portions, the plurality of portions comprising the first and second portion, weighting the activity per cell of the grid based on the portion the cell is assigned to, and predicting the future quality of service of the wireless communication link based on the weighted activity per cell of the grid.

9. The method according to one of the claims 4 to 8, wherein the grid is a two-dimensional circular grid, or wherein the grid is a two-dimensional rectangular grid,
and/or wherein the weights assigned to the activity of the respective cells are inherent to a machine-learning model used to predict the future quality of service,
and/or wherein the weights assigned to the activity of the respective cells are based on a statistical model.

10. The method according to one of the claims 1 to 9, wherein the method comprises predicting (140) the future quality of service of a plurality of wireless communication links between the mobile transceiver and a plurality of further mobile transceivers based on the activity of the one or more active transceivers, wherein, for each further mobile transceiver of the plurality of further mobile transceivers, an activity of an active transceiver that is located closer to the further mobile transceiver receives less weight in the prediction of the future quality of service of the respective wireless communication link than an activity of an active transceiver that is located further away from the further mobile transceiver.

11. The method according to one of the claims 1 to 10, comprising adjusting (150) one or more parameters of a content being transmitted over the wireless communication link based on the predicted further quality of service of the wireless communication link.

12. A computer program having a program code for performing the method according to one of the claims 1 to 11, when the computer program is executed on a computer, a processor, or a programmable hardware component.

13. An apparatus (10) for predicting a future quality of service of a wireless communication link between a mobile transceiver (100) and a further mobile transceiver (102), the apparatus comprising:
one or more interfaces (12) for communicating in a mobile communication system; and
a control module (14) configured to carry out the method according to one of the claims 1 to 11.

14. A mobile transceiver (100; 105) comprising the apparatus (10) according to claim 13.

## Patentansprüche

1. Verfahren zur Vorhersage einer zukünftigen Dienstgüte einer Drahtloskommunikationsverbindung zwischen einem mobilen Sendeempfänger und einem weiteren mobilen Sendeempfänger, wobei das Verfahren umfasst:
Bestimmen (110) von Informationen zu einem oder mehreren aktiven Sendeempfängern in der Umgebung des mobile Sendeempfängers;
Bestimmen (120) von Informationen zu einer Aktivität der ein oder mehreren aktiven Sendeempfänger, wobei die Aktivität der ein oder mehreren aktiven Sendeempfänger Aktivität mit Bezug auf Drahtlosübertragungen ist; und
Vorhersage (140) der zukünftigen Dienstgüte der Drahtloskommunikationsverbindung, basierend auf der Aktivität der ein oder mehreren aktiven Sendeempfänger, **dadurch gekennzeichnet, dass** eine Aktivität eines aktiven Sendeempfängers, der näher an dem weiteren mobilen Sendeempfänger positioniert ist, weniger Gewicht in der Vorhersage der zukünftigen Dienstgüte erhält als eine Aktivität eines aktiven Sendeempfängers, der weiter entfernt von dem weiteren mobilen Sendeempfänger positioniert ist.

2. Verfahren nach Anspruch 1, wobei die Umgebung des mobilen Sendeempfängers eine erste Region und eine zweite Region umfasst, wobei die erste Region auf einer Seite des mobilen Sendeempfängers positioniert ist, die zu dem weiteren mobilen Sendeempfänger weist, und die zweite Region auf einer Seite des mobilen Sendeempfängers positioniert ist, die von dem weiteren mobilen Sendeempfänger wegweist, wobei eine Aktivität eines ersten aktiven Sendeempfängers, der innerhalb der ersten Region positioniert ist, weniger Gewicht in der Vorhersage der zukünftigen Dienstgüte erhält als eine Aktivität eines zweiten aktiven Sendeempfängers, der innerhalb der zweiten Region positioniert ist.

3. Verfahren nach einem der Ansprüche 1 oder 2, wobei die zukünftige Dienstgüte der Drahtloskommunikationsverbindung ferner auf einer Distanz zwischen dem weiteren mobilen Sendeempfänger und dem mobilen Sendeempfänger basiert.

4. Verfahren nach einem der Ansprüche 1 bis 3, umfassend das Erzeugen (130) eines Gitters der Funkumgebung des mobilen Sendeempfängers, wobei das Gitter eine Mehrzahl von angrenzenden Zellen umfasst, wobei die Informationen zu der Aktivität der ein oder mehreren aktiven Sendeempfänger bestimmt werden durch Angeben der Aktivität der ein oder mehreren aktiven Sendeempfänger pro Zelle in dem Gitter.

5. Verfahren nach Anspruch 4, umfassend das Bestimmen (132; 134) eines ersten Abschnitts des Gitters, der näher an dem weiteren mobilen Sendeempfänger positioniert ist, und eines zweiten Abschnitts des Gitters, der weiter von dem weiteren mobilen Sendeempfänger entfernt positioniert ist, wobei die zukünftige Dienstgüte der Drahtloskommunikationsverbindung vorhergesagt wird (140) basierend auf der Aktivität, die pro Zelle in dem Gitter angegeben ist, wobei eine Aktivität innerhalb einer Zelle des ersten Abschnitts des Gitters weniger Gewicht in der Vorhersage der zukünftigen Dienstgüte erhält als eine Aktivität innerhalb einer Zelle des zweiten Abschnitts des Gitters.

6. Verfahren nach Anspruch 5, wobei das Gitter mit einer imaginären Linie zwischen dem mobilen Sendeempfänger und dem weiteren mobilen Sendeempfänger ausgerichtet ist, wobei der erste und der zweite Abschnitt des Gitters bestimmt werden basierend auf einer vorbestimmten Zuordnung von Zellen des Gitters zu dem ersten und dem zweiten Abschnitt des Gitters.

7. Verfahren nach einem der Ansprüche 5 oder 6, wobei aktive Sendeempfänger in dem zweiten Abschnitt des Gitters eine höhere Wahrscheinlichkeit dafür aufweisen, dass sie gegenüber dem weiteren mobilen Sendeempfänger verborgen bleiben, als aktive Sendeempfänger in dem ersten Abschnitt des Gitters.

8. Verfahren nach einem der Ansprüche 5 bis 7, wobei das Verfahren das Unterteilen (136) des Gitters in eine Mehrzahl von Abschnitten umfasst, wobei die Mehrzahl von Abschnitten den ersten und zweiten Abschnitt umfasst, sowie das Gewichten Aktivität pro Zelle des Gitters, basierend auf dem Abschnitt, dem die Zelle zugeordnet ist, und die Vorhersage der zukünftigen Dienstgüte der Drahtloskommunikationsverbindung basierend auf der gewichteten Aktivität pro Zelle des Gitters.

9. Verfahren nach einem der Ansprüche 4 bis 8, wobei das Gitter ein zweidimensionales kreisförmiges Gitter ist oder wobei das Gitter ein zweidimensionales rechteckiges Gitter ist, und/oder wobei die Gewichte, die der Aktivität der entsprechenden Zellen zugeordnet sind, einem maschinellen Lernmodell eigen sind, das zur Vorhersage der zukünftigen Dienstgüte verwendet wird, und/oder wobei die Gewichte, die der Aktivität der entsprechenden Zellen zugeordnet sind, auf einem statistischen Modell basieren.

10. Verfahren nach einem der Ansprüche 1 bis 9, wobei das Verfahren die Vorhersage (140) der zukünftigen Dienstgüte einer Mehrzahl von Drahtloskommunikationsverbindungen zwischen dem mobilen Sendeempfänger und einer Mehrzahl weiterer mobiler Sendeempfänger umfasst, basierend auf der Aktivität der ein oder mehreren aktiven Sendeempfänger, wobei für jeden weiteren mobilen Sendeempfänger der Mehrzahl weiterer mobiler Sendeempfänger eine Aktivität eines aktiven Sendeempfängers, der näher an dem weiteren mobilen Sendeempfänger positioniert ist, weniger Gewicht in der Vorhersage der zukünftigen Dienstgüte der entsprechenden Drahtloskommunikationsverbindung erhält als eine Aktivität eines aktiven Sendeempfängers, der weiter entfernt von dem weiteren mobilen Sendeempfänger positioniert ist.

11. Verfahren nach einem der Ansprüche 1 bis 10, umfassend das Anpassen (150) von einem oder mehreren Parametern eines über die Drahtloskommunikationsverbindung übertragenen Inhalts, basierend auf der vorhergesagten weiteren Dienstgüte der Drahtloskommunikationsverbindung.

12. Computerprogramm, aufweisend einen Programmcode zum Durchführen des Verfahrens nach einem der Ansprüche 1 bis 11, wenn das Computerprogramm auf einem Computer, einem Prozessor oder einer programmierbaren Hardwarekomponente ausgeführt wird.

13. Vorrichtung (10) zur Vorhersage einer zukünftigen Dienstgüte einer Drahtloskommunikationsverbindung zwischen einem mobilen Sendeempfänger (100) und einem weiteren mobilen Sendeempfänger (102), wobei die Vorrichtung umfasst:
eine oder mehrere Schnittstellen (12) zur Kommunikation in einem mobilen Kommunikationssystem; und
ein Steuermodul (14), ausgelegt zum Durchführen des Verfahrens nach einem der Ansprüche 1 bis 11.

14. Mobiler Sendeempfänger (100; 105), umfassend die Vorrichtung (10) nach Anspruch 13.

## Revendications

1. Procédé de prédiction d'une qualité de service future d'une liaison de communication sans fil entre un émetteur-récepteur mobile et un autre émetteur-récepteur mobile, le procédé comprenant :
la détermination (110) d'informations relatives à un ou plusieurs émetteurs-récepteurs actifs dans l'environnement de l'émetteur-récepteur mobile ;
la détermination (120) d'informations sur une activité des un ou plusieurs émetteurs-récepteurs actifs, l'activité des un ou plusieurs émetteurs-récepteurs actifs étant une activité relative à des transmissions sans fil ; et
la prédiction (140) de la qualité de service future de la liaison de communication sans fil en fonction de l'activité des un ou plusieurs émetteurs-récepteurs actifs, **caractérisé en ce que**
une activité d'un émetteur-récepteur actif situé plus près de l'autre émetteur-récepteur mobile a moins de poids dans la prédiction de la qualité de service future qu'une activité d'un émetteur-récepteur actif situé plus loin de l'autre émetteur-récepteur mobile.

2. Procédé selon la revendication 1, dans lequel l'environnement de l'émetteur-récepteur mobile comprend une première région et une seconde région, la première région étant située sur un côté de l'émetteur-récepteur mobile faisant face à l'autre émetteur-récepteur mobile, la seconde région étant située sur un côté de l'émetteur-récepteur mobile faisant face à l'autre émetteur-récepteur mobile, dans lequel une activité d'un premier émetteur-récepteur actif situé dans la première région reçoit moins de poids dans la prédiction de la qualité de service future qu'une activité d'un deuxième émetteur-récepteur actif situé dans la seconde région.

3. Procédé selon l'une des revendications 1 ou 2, dans lequel la qualité de service future de la liaison de communication sans fil est basée en outre sur une distance entre l'autre émetteur-récepteur mobile et l'émetteur-récepteur mobile.

4. Procédé selon l'une des revendications 1 à 3, comprenant la génération (130) d'un réseau de l'environnement radio de l'émetteur-récepteur mobile, le réseau comprenant une pluralité de cellules adjacentes, dans lequel les informations sur l'activité des un ou plusieurs émetteurs-récepteurs actifs est déterminée en indiquant l'activité des un ou plusieurs émetteurs-récepteurs actifs par cellule dans le réseau.

5. Procédé selon la revendication 4, comprenant la détermination (132 ; 134) d'une première partie du réseau située plus près de l'autre émetteur-récepteur mobile et d'une deuxième partie du réseau située plus loin de l'autre émetteur-récepteur mobile, dans lequel la qualité de service future de la liaison de communication sans fil est prédite (140) sur la base de l'activité indiquée par cellule dans le réseau, dans lequel une activité à l'intérieur d'une cellule de la première partie du réseau reçoit moins de poids dans la prédiction de la qualité future du service qu'une activité à l'intérieur d'une cellule de la deuxième partie du réseau.

6. Procédé selon la revendication 5, dans lequel le réseau est aligné avec une ligne imaginaire entre l'émetteur-récepteur mobile et l'autre émetteur-récepteur mobile, dans lequel les première et deuxième parties du réseau sont déterminées sur la base d'une affectation prédéterminée de cellules du réseau aux première et deuxième parties du réseau.

7. Procédé selon l'une des revendications 5 ou 6, dans lequel des émetteurs-récepteurs actifs dans la deuxième partie du réseau ont une probabilité plus élevée d'être cachés vis-à-vis de l'autre émetteur-récepteur mobile que les émetteurs-récepteurs actifs dans la première partie du réseau.

8. Procédé selon l'une des revendications 5 à 7, dans lequel le procédé comprend la subdivision (136) du réseau en une pluralité de parties, la pluralité de parties comprenant les première et deuxième parties, la pondération de l'activité par cellule du réseau en fonction de la partie à laquelle la cellule est affectée, et la prédiction de la qualité de service future de la liaison de communication sans fil en fonction de l'activité pondérée par cellule du réseau.

9. Procédé selon l'une des revendications 4 à 8, dans lequel le réseau est un réseau circulaire bidimensionnel, ou dans lequel le réseau est un réseau rectangulaire bidimensionnel,
et/ou dans lequel les poids attribués à l'activité des cellules respectives sont inhérents à un modèle d'apprentissage automatique utilisé pour prédire la qualité de service future,
et/ou dans lequel les poids attribués à l'activité des cellules respectives sont basés sur un modèle statistique.

10. Procédé selon l'une des revendications 1 à 9, dans lequel le procédé comprend la prédiction (140) de la qualité de service future d'une pluralité de liaisons de communication sans fil entre l'émetteur-récepteur mobile et une pluralité d'autres émetteurs-récepteurs mobiles en fonction de l'activité des un ou plusieurs émetteurs-récepteurs actifs, dans lequel, pour chaque autre émetteur-récepteur mobile de la pluralité d'autres émetteurs-récepteurs mobiles, une activité d'un émetteur-récepteur actif situé plus près de l'autre émetteur-récepteur mobile a moins de poids dans la prédiction de la qualité de service future de la liaison de communication sans fil respective qu'une activité d'un émetteur-récepteur actif situé plus loin de l'autre émetteur-récepteur mobile.

11. Procédé selon l'une des revendications 1 à 10, comprenant le réglage (150) d'un ou plusieurs paramètres d'un contenu transmis sur la liaison de communication sans fil en fonction de l'autre qualité de service prédite de la liaison de communication sans fil.

12. Programme d'ordinateur ayant un code de programme pour réaliser le procédé selon l'une des revendications 1 à 11, lorsque le programme informatique est exécuté sur un ordinateur, un processeur ou un composant matériel programmable.

13. Appareil (10) de prédiction de la qualité de service future d'une liaison de communication sans fil entre un émetteur-récepteur mobile (100) et un autre émetteur-récepteur mobile (1 02), l'appareil comprenant :
une ou plusieurs interfaces (12) pour communiquer dans un système de communication mobile ; et
un module de commande (14) configuré pour entreprendre le procédé selon l'une des revendications 1 à 11.

14. Émetteur-récepteur mobile (100 ; 105) comprenant l'appareil (10) selon la revendication 13.
